# EUROPÄISCHE PATENTSCHRIFT

(11) **EP 2 310 542 B1**
(45) Veröffentlichungstag und Bekanntmachung des Hinweises auf die Patenterteilung: **19.09.2012**
(21) Anmeldenummer: 09776078.9
(22) Anmeldetag: 10.08.2009
(51) Int. Cl.: C21D 1/10, C21D 9/32, H05B 6/40, C21D 1/42

(54) **VORRICHTUNG ZUM HÄRTEN DER ZÄHNE VON ZAHNRÄDERN DURCH INDUKTIVEN EINZELNZAHN-WÄRMEBEHANDLUNG MIT MEHREREN INDUKTOREN**
DEVICE FOR HARDENING THE TEETH OF GEAR WHEELS BY INDIVIDUAL INDUCTIVE HEAT TREATMENT FOR EACH TOOTH, USING SEVERAL INDUCTORS
DISPOSITIF POUR DURCIR LES DENTS DE ROUES DENTÉES PAR TRAITEMENT THERMIQUE PAR INDUCTION INDIVIDUEL POUR CHAQUE ROUE, AU MOYEN DE PLUSIEURS INDUCTEURS

(30) Priorität: 13.08.2008 DE 102008038967
(43) Veröffentlichungstag der Anmeldung: 20.04.2011
(73) Patentinhaber: EFD Induction GmbH, 79106 Freiburg (DE)
(72) Erfinder: ZERNICKEL, Reinhard, 79183 Waldkirch (DE); WAGNER, Josef, 79359 Riegel (DE)
(74) Vertreter: Goy, Wolfgang
(86) Internationale Anmeldenummer: PCT/DE2009/001128
(87) Internationale Veröffentlichungsnummer: WO 2010/017810

(56) Entgegenhaltungen:
- GB-A- 595 672
- GB-A- 788 752
- US-A- 2 277 082
- US-A- 4 123 642

## Beschreibung

Die Erfindung betrifft eine Vorrichtung zum Härten der Zähne von Zahnrädern durch induktive Wärmebehandlung nach den - übereinstimmenden - Oberbegriffen der beiden Nebenansprüche 1 und 2.

Die Vorrichtung ist dabei für Zahnräder sowohl mit einer Außenverzahnung als auch mit einer Innenverzahnung geeignet.

Je nach dem Verwendungszweck von Zahnrädern müssen die einzelnen Zähne gehärtet werden. Dies geschieht bei großen Zahnrädern in der Regel durch eine Einzelzahnhärtung. Es ist dabei zu unterscheiden zwischen der Härtung des Zahnkopfes, nämlich dem Zahnkörper, oder - je nach Verwendungszweck - der Härtung der Zahnlücken.

Die Härtung dieser großen Zahnräder wird in verstärktem Maße auf Induktionserwärmungsanlagen durchgeführt. Hierzu werden die Zahnräder auf einer Dreheinrichtung (in aller Regel eine NC-Achse) aufgespannt.

Die Härtung erfolgt mittels eines Induktors durch Erwärmung einer genau definierten Zone des Zahnkörpers mit einer definierten Erwärmungstiefe auf eine genau definierte Glühtemperatur (Härtetemperatur). Der sofort sich anschließende Abschreckvorgang mittels eines geeigneten Abschreckmediums (z.B. Wasser, evtl. mit bestimmten beigemischten Zusätzen) härtet die Zähne auf einen vorgegebenen Härtegrad.

Die Durchführung dieser Zahnradhärtung erfolgt bislang auf Maschinen mit einem einzigen Induktor. Der Härtevorgang ist mit einem erheblichen Zeitaufwand verbunden, der - je nach Größe des Zahnrades - bis in den Stundenbereich hineinreicht. Dabei werden entweder direkt benachbarte Zahnköpfe/Zahnlücken in einer einzigen Umdrehung bearbeitet. Die Bearbeitung kann aber auch in einem definierten Abstand der Zahnköpfe/Zahnlücken erfolgen, d. h. jeder zweite, dritte, vierte etc. Zahnkopf/Zahnlücke wird gehärtet. Dadurch wird die thermische Beeinflussung der Nachbarzähne durch den vorangegangenen Härteprozeß vermindert. Bei diesem Verfahren muß das Zahnrad daher mehrmals komplett gedreht werden.

Die US 2 277 082 A zeigt eine Vorrichtung zum Härten der Zähne eines Zahnrads der eingangs angegebenen Art. Hierfür sind zwei Induktoren vorgesehen, welche diametral einander gegenüberstehen. Nach dem induktiven Härten eines entsprechenden Zahn-Paares und nach dem Abschrecken durch Wasserbeaufschlagung wird das Zahnrad zum Härten des nächsten Zahn-Paares gedreht.

Davon ausgehend liegt der Erfindung die Aufgabe zugrunde, unter Einbeziehung des Abschreckens eine verbesserte Vorrichtung zum Härten der Zähne von Zahnrädern durch induktive Wärmebehandlung zu schaffen.

Eine erste technische Lösung schlägt der Nebenanspruch 1 vor.

Die Grundidee der erfindungsgemäßen Vorrichtung liegt in einer Zahnradhärtung unter Verwendung von mehreren Induktoren, welche gleichzeitig arbeiten. Maßgebend ist dabei eine optimierte Aufeinanderfolge der Einsatzzeitpunkte der Härte-Induktoren. Verwendbar ist das Verfahren dabei grundsätzlich sowohl für gerade Verzahnungen als auch für Schrägverzahnungen (mit Links- oder Rechtssteigung), außerdem sowohl für Außenverzahnungen als auch für Innenverzahnungen. Durch die gezielte und zeitlich abgestimmte Verwendung von mehreren Härte-Induktoren ergibt sich daraus insgesamt die Möglichkeit, das Zahnrad sehr viel schneller zu härten. Voraussetzung ist hierfür ein bestimmter optimierter Algorithmus für die sukzessiv ablaufenden Bearbeitungsschritte mit einem entsprechenden Vortrieb des Zahnrades. Erfindungsgemäß werden die Härte-Induktoren nach dem Härten und Abschrekken zusätzlich als Anlaß-Induktoren verwendet. Somit werden die Zahnkörper/Zahnlücken von den zur Verfügung stehenden Induktoren zunächst erwärmt (wobei die Induktoren dabei als Härte-Induktoren verwendet werden) und danach sofort abgeschreckt. Nach diesem Härtevorgang werden die Zahnkörper/Zahnlücken von den gleichen Induktoren mit verminderter Leistung angelassen. In diesem Fall fungieren die Induktoren dann als Anlaß-Induktoren. Unter "Anlassen" wird dabei verstanden, daß die Zahnkörper/Zahnlücken mit verminderter Energieleistung erwärmt werden, so daß sich eine wesentlich geringere Erwärmungstemperatur einstellt. Ein Abschrecken ist dabei nicht vorgesehen. Das Anlassen dient dazu, Spannungen im Metall abzubauen. Durch die Verwendung der Härte-Induktoren als Anlaß-Induktoren ergibt sich eine wesentlich schnellere Bearbeitung des Zahnrades. Das Anlassen kann dabei auf mehrere Arten erfolgen. So können einmal die Zähne mit der gleichem Programmfolge wie beim Härten mit verminderter Energieleistung angelassen werden. Dabei kann (wie zuvor beschrieben) entweder eine segmentweise Bearbeitung oder aber eine Bearbeitung durch Überspringen der Zähne erfolgen. Es ist aber auch denkbar, daß bei dem Verfahren, bei dem nicht segmentweise gearbeitet wird, sondern bei dem Zähne übersprungen werden, das Zahnrad nach jeweils einer Umdrehung, also nach erfolgter Härtung, in der Folgeumdrehung von den gleichen Induktoren angelassen wird. Anschließend erfolgt dann in der nachfolgenden Umdrehung wieder eine Härtung, anschließend wieder ein Anlassen etc. Insgesamt ist die Programmfolge beim Anlassen identisch wie beim Härten. Es ergibt sich somit ein 1. Zyklus Härten / 1. Zyklus Anlassen / 2. Zyklus Härten / 2. Zyklus Anlassen etc.

Eine zweite technische Lösung schlägt der Nebenanspruch 2 vor.

Die Grundidee der erfindungsgemäßen Vorrichtung liegt in einer Zahnradhärtung unter Verwendung von mehreren Induktoren, welche gleichzeitig arbeiten. Maßgebend ist dabei eine optimierte Aufeinanderfolge der Einsatzzeitpunkte der Härte-Induktoren. Verwendbar ist das Verfahren dabei grundsätzlich sowohl für gerade Verzahnungen als auch für Schrägverzahnungen (mit Links- oder Rechtssteigung), außerdem sowohl für Außenverzahnungen als auch für Innenverzahnungen. Durch die gezielte und zeitlich abgestimmte Verwendung von mehreren Härte-Induktoren ergibt sich daraus insgesamt die Möglichkeit, das Zahnrad sehr viel schneller zu härten. Voraussetzung ist hierfür ein bestimmter optimierter Algorithmus für die sukzessiv ablaufenden Bearbeitungsschritte mit einem entsprechenden Vortrieb des Zahnrades. Erfindungsgemäß sind zusätzliche Anlaß-Induktoren vorgesehen. Auch diese arbeiten mit verminderter Energieleistung und damit mit einer wesentlich geringeren Erwärmungstemperatur ohne Abschrecken. Auch hier kann die Bearbeitung segmentweise oder aber durch Überspringen von Zähnen erfolgen. In dieser Version werden die Zähne von der ersten Hälfte der Induktoren gehärtet, während im Verlauf der gleichen Umdrehung des Zahnrades von der zweiten Hälfte der Induktoren die Zähne angelassen werden. Das Anlassen erfolgt jedoch nach einem definierten Vorlauf der Härte-Induktoren. Hier wird eingestellt, bei wie vielen Zähne (mindestens 1 Zahn) der Anlaßvorgang nach dem Start des Härtungsvorganges beginnen soll. Die bisweilen komplexen Bewegungsfolgen der Härte-Induktoren und der Anlaß-Induktoren zueinander werden durch eine geeignete Arithmetik berechnet. Der Start der Anlaß-Induktoren kann auch deshalb mehr als 1 Zahn verzögert sein, weil es von den physikalischen Beeinflussungen (Härten und sofort danach Anlassen) unabdingbar ist, den soeben gehärteten Zähnen eine gewisse Ruhezeit (sogenannte Ruhezähne) zu gewähren, bevor der Anlaßvorgang durchgeführt wird. So kann die Verzögerung auch dadurch bedingt sein, daß vor dem Anlassen die soeben gehärteten Zähne einer definierten Nachbrausezeit ausgesetzt werden müssen. Bei einem Härten und Anlassen bei zwei bzw. einem Mehrfachen von zwei Induktoren können die Zahnkörper/Zahnlücken von einem oder mehreren Induktoren erwärmt und danach sofort abgeschreckt werden. Ein im gleichen Zahn nachfolgender Anlaß-Induktor (übereinander angeordnet) erwärmt dann die Härtezone auf Anlaßtemperatur. Zwei oder mehrere Induktoren sind somit am Umfang des Zahnrades verteilt. Der erste Härte-Indutor, welcher oberhalb des jeweils zweiten Anlaß-Induktors angeordnet ist, erwärmt den Zahn auf Härte-Temperatur. Durch sofortiges Abschrecken der Wärmungszone wird diese gehärtet. Der im gleichen Zahn nachfolgende zweite Anlaß-Induktor erwärmt die Härtezone auf Anlaß-Temperatur. Der Vorteil hier besteht darin, daß die Nebenzeiten kürzer werden.

Vorzugsweise sind gemäß der Weiterbildung in Anspruch 3 die Härte-Induktoren im Wesentlichen gleichmäßig um den Umfang des Zahnrads angeordnet. Dadurch ist die gegenseitige Störung der Härte-Induktoren am geringsten. Werden beispielsweise zwei Härteinduktoren verwendet, liegen sie im Wesentlichen im Winkel von 180° auseinander. Bei drei Härte-Induktoren sind es dann zwischen den einzelnen Induktoren jeweils ungefähr 120°.

In einer ersten Variante des Verfahrensablaufs wird gemäß Anspruch 4 die segmentweise Bearbeitung des Zahnrades vorgeschlagen. Dies bedeutet, daß mehrere Härte-Induktoren um den Umfang des Zahnrades verteilt angeordnet sind und diese sich die Bearbeitung segmentweise aufteilen. Hierbei werden jeweils direkt benachbarte Zahnkörper/Zahnlücken gleichzeitig durch die Härte-Induktoren in einer einzigen Umdrehung des Zahnrads bearbeitet.

Eine Alternative hierzu schlägt Anspruch 5 vor. Dabei sind gleichermaßen mehrere Härte-Induktoren um den Umfang des Zahnrads verteilt angeordnet. Die Bearbeitung erfolgt jedoch hier in einem definierten Abstand, d. h. es wird jeder zweite, dritte, vierte etc. Zahnkörper/Zahnlücke gehärtet. Dies erfolgt dabei synchron durch sämtliche der zur Verfügung stehenden Härte-Induktoren. Dadurch wird die thermische Beeinflussung der Nachbarzähne des jeweiligen Induktorsegments durch den vorangegangenen Härteprozeß vermindert. Dies bedeutet weiterhin, daß das Zahnrad in mehreren Umdrehungen bearbeitet wird.

Eine weitere Weiterbildung gemäß Anspruch 6 schlägt vor, daß die Härte-Induktoren und/oder die Anlaß-Induktoren in Umfangsrichtung gesehen verstellbar sind. Dadurch ist die Anlage für die unterschiedlichsten Zahnräder mit einer unterschiedlichen Anzahl an Zähnen einsetzbar. Die Ausrichtung der Induktoren wird dabei durch ein Programm berechnet, so daß die Induktoren entsprechend positioniert werden können. Auch hat die Verstellung der Induktoren in Umfangsrichtung gesehen den Vorteil, daß irgendwelche Verzugserscheinungen im Zahnrad ausgeglichen werden können.

Wie zuvor bereits erwähnt, schlägt die Weiterbildung gemäß Anspruch 7 unterschiedliche Zyklen zum Härten der Zähne des Zahnrades vor.

Schließlich schlägt die Weiterbildung gemäß Anspruch 8 vor, daß die Zähne vorgewärmt werden. Die Zahnkörper/Zahnlücken werden somit von zwei oder einem Mehrfachen von zwei Induktoren vorgewärmt und sofort vom jeweiligen nachfolgenden zweiten Induktor (übereinander angeordnet) gehärtet. Durch das Vorwärmen wird beispielsweise eine verminderte Rißanfälligkeit des Härtegutes erreicht.

Zwei Ausführungsbeispiele der erfindungsgemäßen Vorrichtung zum Härten der Zähne von Zahnrädern durch induktive Wärmebehandlung werden nachfolgend anhand der Zeichnungen beschrieben. Dabei zeigt:
- Fig. 1a bis 1f: die erste Ausführungsform mit zwei Härte-Induktoren für Zahnköpfe;
- Fig. 2a bis 2f: die zweite Ausführungsform mit zwei Härte-Induktoren sowie mit zwei Anlaß-Induktoren für Zahnlücken.

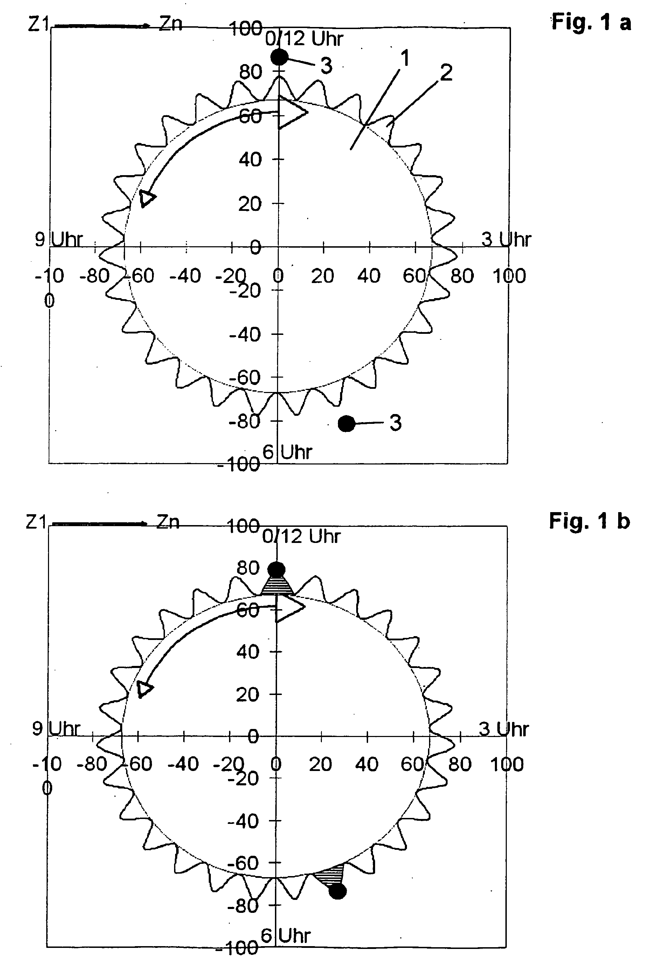

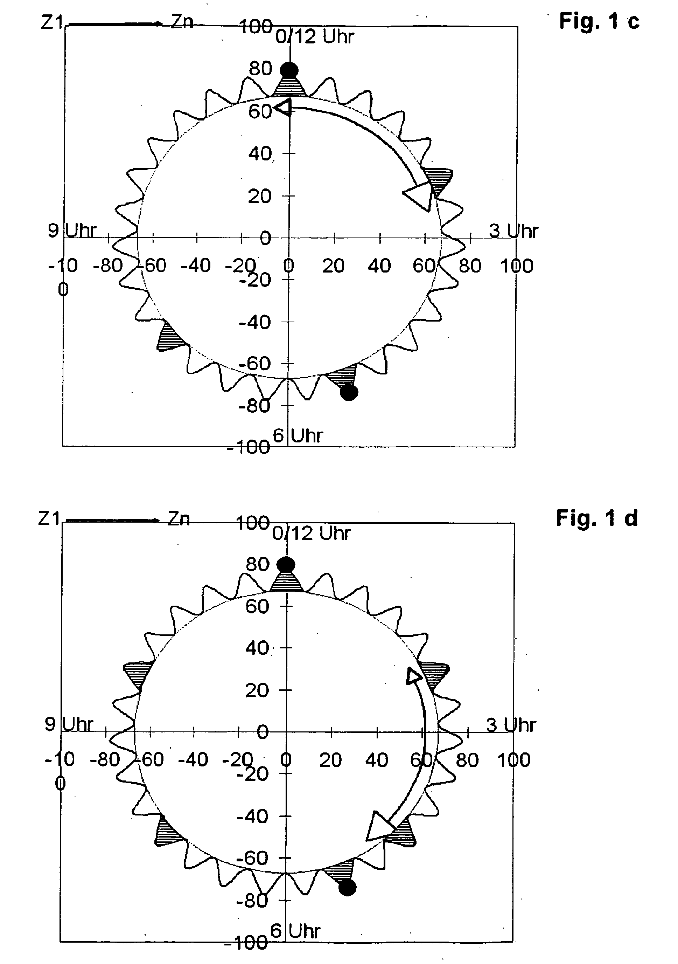

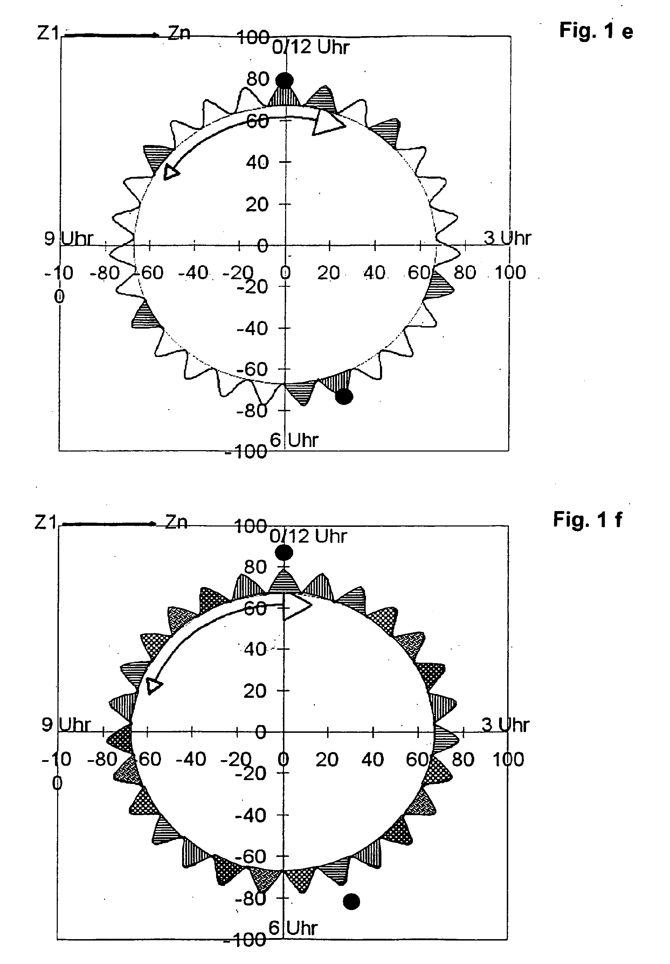

Bei der ersten Ausführungsvariante ist in Fig. 1 a die Anfangsstellung gezeigt. Es ist ein Zahnrad 1 mit zu härtenden 27 Zähnen 2 drehbar gelagert. Weiterhin sind zwei Härte-Induktoren 3 vorgesehen. Die beiden Härte-Induktoren 3 befinden sich ca. auf 12-Uhr-Stellung und auf 5-Uhr-Stellung. Die Ausrichtung der beiden Härte-Induktoren 3 wird von einem Programm berechnet.

In Fig. 1b ist gezeigt, wie die beiden Härte-Induktoren 3 im Einsatz sind und den Zahnkörper Nr. 1 und den Zahnkörper Nr. 16 härten. Dies ist in der Zeichnung durch die horizontale Schraffur kenntlich gemacht.

In Fig. 1c ist dargestellt, daß das Zahnrad 1 um fünf Zähne 2 weitergedreht worden ist. Dies bedeutet, daß sich nunmehr der Zahn Nr. 6 und der Zahn Nr. 21 im Bereich der beiden Härte-Induktoren 3 befinden. Durch die große Entfernung der beiden Härte-Induktoren 3 zueinander ist eine gegenseitige Beeinflussung ausgeschlossen.

Fig. 1d zeigt einen weiteren Takt des ersten Zyklus. Nach dieser Weitertaktung des Zahnrades 1 auf diese Stellung sind die Härte-Induktoren 3 wieder in Tätigkeit. Damit ist der erste Zyklus beendet.

In Fig. 1e beginnt der zweite Zyklus. Dieser ist durch eine andere Schraffur gekennzeichnet.

Es geht immer so weiter mit sukzessiven Takten sowie sukzessiven Zyklen, bis sämtliche 27 Zähne 2 des Zahnrads 1 vollständig gehärtet sind. Dieser Endzustand ist in Fig. 1f dargestellt.

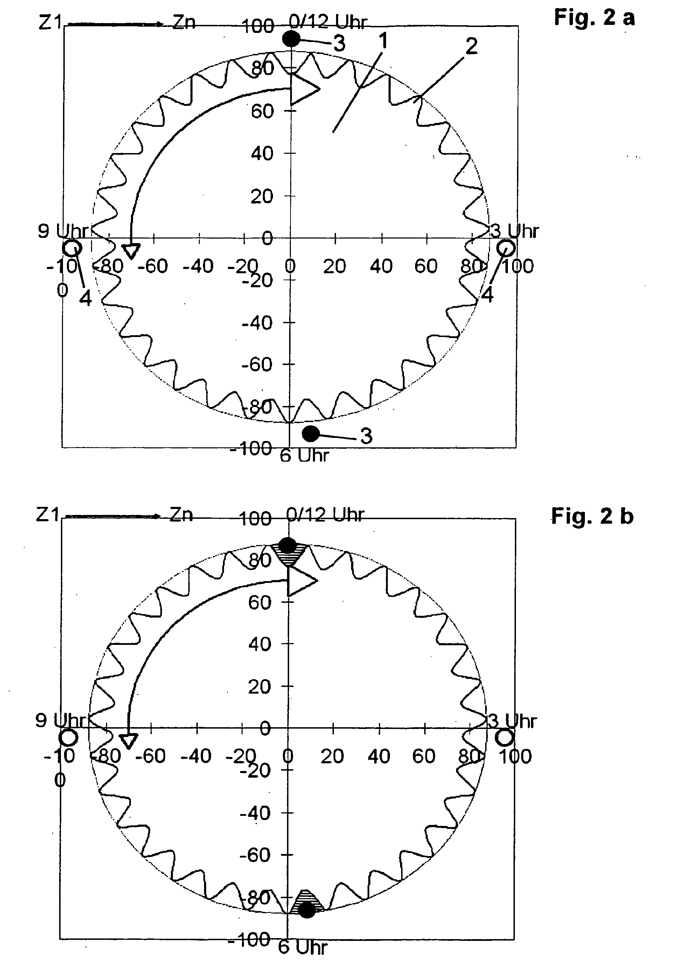

Die Ausführungsvariante in den Fig. 2a bis Fig. 2f unterscheidet sich von der ersten Ausführungsvariante der Fig. 1a bis Fig. 1f dadurch, daß zusätzlich zu den beiden Härte-Induktoren 3 noch zwei Anlaß-Induktoren 4 vorgesehen sind.

Dabei ist in Fig. 2a die Anfangsstellung mit einem Zahnrad 1 aus 31 Zähnen 2 dargestellt. Dabei befinden sich die beiden Härten-Induktoren 3 in etwa auf 12-Uhr-Stellung sowie auf 6-Uhr-Stellung und die beiden Anlaß-Induktoren 4 auf ungefähr 3-Uhr-Stellung und auf 9-Uhr-Stellung. Auch hier wird die Ausrichtung der Induktoren 3, 4 von einem Programm berechnet.

In Fig. 2b sind die beiden Härte-Induktoren 3 im Einsatz und härten - nicht wie beim ersten Ausführungsbeispiel - die Zahnkörper, sondern die Zahnlücken. Die Anlaß-Induktoren 4 sind zu diesem Zeitpunkt noch nicht im Einsatz, da noch keine gehärteten Zahnlücken vorhanden sind.

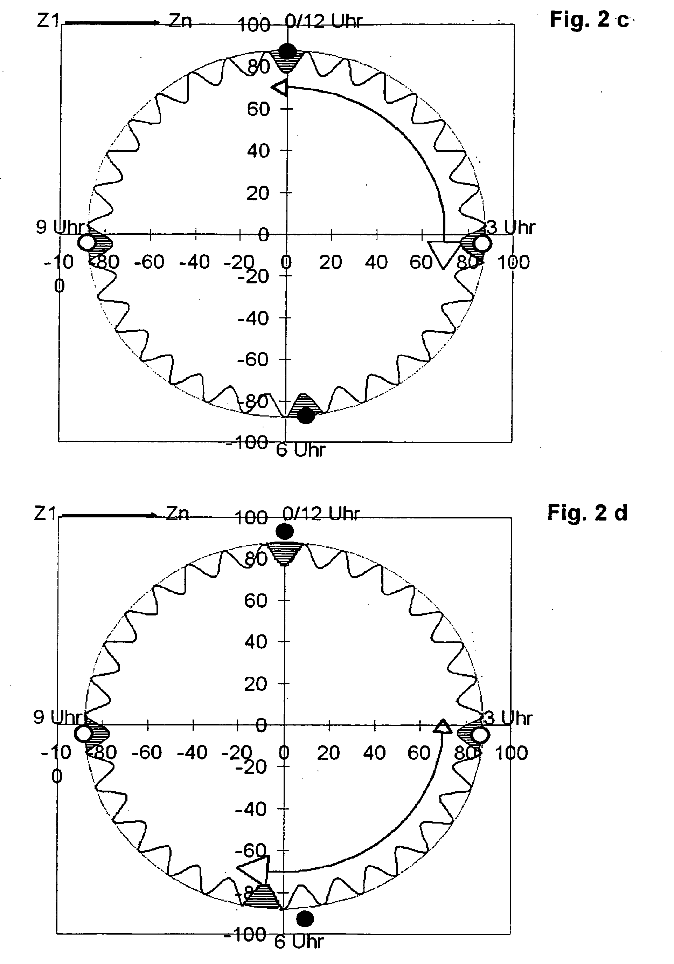

Fig. 2c zeigt den zweiten Takt nach dem Weiterdrehen des Zahnrads 1. Die beiden Härte-Induktoren 3 härten die Zahnlücken Nr. 9 sowie Nr. 25. Durch die große Entfernung diese beiden Härte-Induktoren 3 ist eine gegenseitige Beeinflussung ausgeschlossen. Zeitlich parallel zu diesem Härten erwärmen die beiden Anlaß-Induktoren 4 die zuvor gehärteten Zahnlücken Nr. 1 und Nr. 17 auf Anlaß-Temperatur.

Nach der Weitertaktung in Fig. 2d sind in dieser Stellung des Zahnrads 1 die Härte-Induktoren 3 nicht in Betrieb. Die Anlaß-Induktoren 4 hingegen erwärmen die Zahnlücken Nr. 9 sowie Nr. 25. Beide wurden zuvor im vorhergehenden Arbeitstakt von den Härte-Induktoren 3 gehärtet.

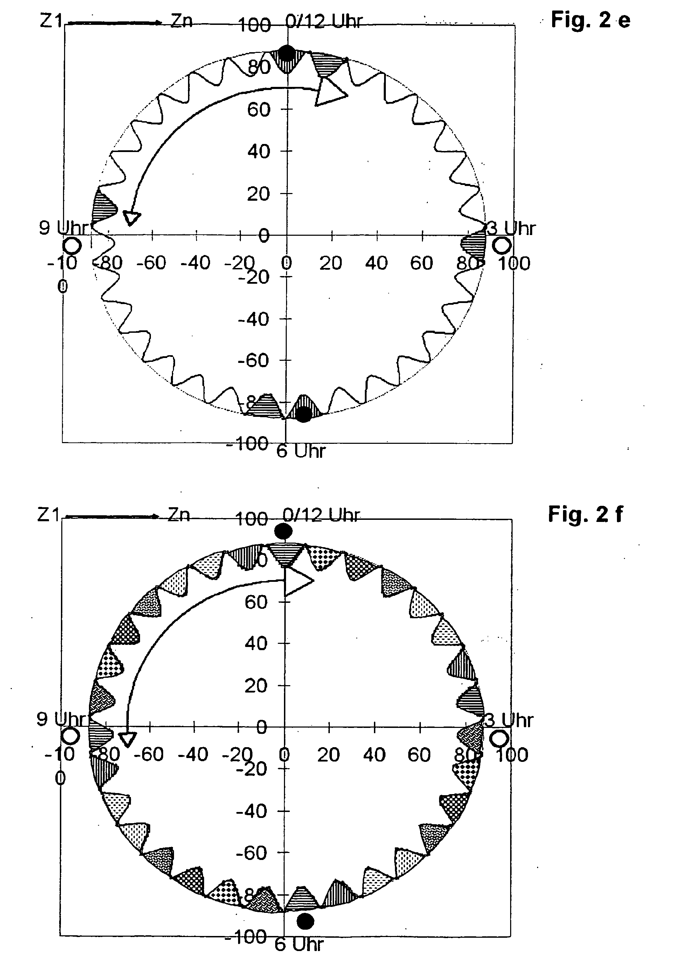

In Fig. 2e ist der zweite Zyklus, insgesamt Takt 4 dargestellt. In diesem Takt sind wiederum nur die Härte-Induktoren 3 im Einsatz. Diese härten die Zahnlücke Nr. 2 sowie Nr. 18. Die beiden Anlaß-Induktoren 4 sind nicht in Betrieb.

Das Spiel setzt sich sukzessive fort, bis gemäß Fig. 2f der Endzustand erreicht ist. Gezeigt ist die Situation des Zahnrades 1 mit den gehärteten und angelassenen Zähnen 2.

Die erste Ausführungsvariante ist vom Grundprinzip her auch für Zahnlücken einsetzbar, während die zweite Ausführungsvariante vom Grundprinzip her auch für Zahnköpfe einsetzbar ist. Außerdem sind beide Ausführungsvarianten auch für Innenverzahnungen einsetzbar.

### Bezugszeichenliste

- 1: Zahnrad
- 2: Zähne
- 3: Härte-Induktoren
- 4: Anlaß-Induktoren

## Patentansprüche

1. Vorrichtung zum Härten der Zähne (2) von Zahnrädern (1) durch induktive Wärmebehandlung,
mit einer Dreheinrichtung zum Drehen des Zahnrads (1) um seine Mittelachse sowie mit wenigstens zwei, radial verfahrbaren Härte-Induktoren (3) zum Härten der Zahnkörper und/oder Zahnlücken sowie anschließendem Abschrecken,
wobei die Härte-Induktoren (3) um den Umfang des Zahnrads (1) entsprechend einem ganzzahligen Vielfachen des Sektorwinkels zweier benachbarter Zähne (2) angeordnet sind und
wobei die Härte-Induktoren (3) nach einer bestimmten Drehbewegung des Zahnrads (1) zum Härten der dann im Wirkbereich der Härte-Induktoren (3) liegenden Zähne (2) gleichzeitig betätigbar sind,
**dadurch gekennzeichnet,**
**daß** die gleichen Härte-Induktoren (3) nach dem Härten und Abschrecken zusätzlich als Anlaß-Induktoren (4) verwendet werden.

2. Vorrichtung zum Härten der Zähne (2) von Zahnrädern (1) durch induktive Wärmebehandlung,
mit einer Dreheinrichtung zum Drehen des Zahnrads (1) um seine Mittelachse sowie mit wenigstens zwei, radial verfahrbaren Härte-Induktoren (3) zum Härten der Zahnkörper und/oder Zahnlücken sowie anschließendem Abschrecken,
wobei die Härte-Induktoren (3) um den Umfang des Zahnrads (1) entsprechend einem ganzzahligen Vielfachen des Sektorwinkels zweier benachbarter Zähne (2) angeordnet sind und
wobei die Härte-Induktoren (3) nach einer bestimmten Drehbewegung des Zahnrads (1) zum Härten der dann im Wirkbereich der Härte-Induktoren (3) liegenden Zähne (2) gleichzeitig betätigbar sind,
**dadurch gekennzeichnet,**
**daß** entsprechend der Anzahl der Härte-Induktoren zusätzlich Anlaß-Induktoren (4) vorgesehen sind,
wobei diese Anlaß-Induktoren derart um den Umfang des Zahnrads (1) angeordnet sind, daß die zuvor durch die Härte-Induktoren (3) gehärteten Bereiche des Zahnrads (1) nach einer Drehbewegung des Zahnrads (1) unmittelbar oder nach Auslassen eines oder mehreren Takte in den Wirkungsbereich der Anlaß-Induktoren (4) gelangen.

3. Vorrichtung nach einem der vorhergehenden Ansprüche,
**dadurch gekennzeichnet,**
**daß** Härte-Induktoren (3) im Wesentlichen gleichmäßig um den Umfang des Zahnrads (1) angeordnet sind.

4. Vorrichtung nach einem der Ansprüche 1 bis 3,
**dadurch gekennzeichnet,**
**daß** sich die Härte-Induktoren (3) die Bearbeitung segmentweise aufteilen, indem durch die Härte-Induktoren (3) benachbarte Zähne (2) Zahn für Zahn gehärtet werden.

5. Vorrichtung nach einem der Ansprüche 1 bis 3,
**dadurch gekennzeichnet,**
**daß** beim sukzessiven Vorwärtsdrehen des Zahnrads (1) Zähne (2) übersprungen werden.

6. Vorrichtung nach einem der vorhergehenden Ansprüche,
**dadurch gekennzeichnet,**
**daß** die Härte-Induktoren (3) und/oder die Anlaß-Induktoren (4) in Umfangsrichtung gesehen positionsverstellbar sind.

7. Vorrichtung nach einem der vorhergehenden Ansprüche,
**dadurch gekennzeichnet,**
**daß** zum Härten sämtlicher Zähne (2) des Zahnrads (1) mehrere aufeinanderfolgende Zyklen mit jeweils bestimmten Bearbeitungsfolgen vorgesehen sind.

8. Vorrichtung nach einem der vorhergehenden Ansprüche,
**dadurch gekennzeichnet,**
**daß** die Zähne vorgewärmt werden.

## Claims

1. Device for hardening teeth (2) on gear wheels (9) by inductive heat treatment, with a rotation device to rotate the gear wheel (1) about its centre axis and with at least two radially displaceable hardness inductors (3) for hardening the tooth bodies and/or tooth gaps with subsequent quenching, wherein the hardness inductors (3) are arranged around the periphery of the gear wheel (1) according to an integral multiple of the sector angle of two adjacent teeth (2), and wherein the hardness inductors (3) after a particular rotary movement of the gear wheel (1) can be activated simultaneously to harden the teeth (2) then lying in the active region of the hardness inductors (3), **characterised in that** after hardening and quenching, the same hardness inductors (3) are also used as tempering inductors (4).

2. Device for hardening teeth (2) of gear wheels (1) by inductive heat treatment, with a rotary device to rotate the gear wheel (1) about its centre axis and with at least two radially displaceable hardness inductors (3) for hardening the tooth bodies and/or tooth gaps with subsequent quenching, wherein the hardness inductors (3) are arranged around the periphery of the gear wheel (1) according to an integral multiple of the sector angle of two adjacent teeth (2), and wherein the hardness inductors (3) after a particular rotary movement of the gear wheel (1) can be activated simultaneously to harden the teeth (2) then lying in the active region of the hardness inductors (3), **characterised in that** additional tempering inductors (2) are provided corresponding to the number of hardness indicators, wherein these tempering inductors are arranged around the periphery of the gear wheel (1) such that the regions of the gear wheel (1) previously hardened by the hardness inductors (3), after a rotational movement of the gear wheel (1), enter the active region of the tempering inductors (4) directly or after omission of one or more cycles.

3. Device according to any of the preceding claims, **characterised in that** hardness inductors (3) are arranged substantially evenly around the periphery of the gear wheel (1).

4. Device according to any of claims 1 to 3, **characterised in that** the hardness inductors (3) divide the machining into segments, and **in that** adjacent teeth (2) are hardened tooth by tooth by the hardness inductors (3).

5. Device according to any of claims 1 to 3, **characterised in that** teeth (2) are skipped on successive forward rotation of the gear wheel (1).

6. Device according to any of the preceding claims, **characterised in that** the positions of hardness inductors (3) and/or the tempering inductors (4), viewed in the peripheral direction, are adjustable.

7. Device according to any of the preceding claims, **characterised in that** to harden all teeth (2) of the gear wheel (1), several successive cycles are provided each with specific machining sequences.

8. Device according to any of the preceding claims, **characterised in that** the teeth are pre-heated.

## Revendications

1. Dispositif pour durcir les dents (2) de roues dentées (1) par traitement thermique par induction,
avec un équipement de rotation pour faire tourner la roue dentée (1) autour de l'axe médian de celle-ci,
et avec au moins deux inducteurs de durcissement (3) radialement mobiles, pour durcir les corps de dents et/ou les entredents puis les tremper,
sachant que les inducteurs de durcissement (3) sont disposés autour de la circonférence de la roue dentée (1) conformément à un multiple entier de l'angle de secteur de deux dents voisines (2),
et sachant que les inducteurs de durcissement (3), après un mouvement de rotation donnée de la roue dentée (1), peuvent être actionnés simultanément pour durcir les dents (2) qui se trouvent alors dans la zone d'action des inducteurs de durcissement (3),
**caractérisé en ce que** les mêmes inducteurs de durcissement (3) sont en outre utilisés, après le durcissement et la trempe, comme inducteurs de revenu (4).

2. Dispositif pour durcir les dents (2) de roues dentées (1) par traitement thermique par induction,
avec un équipement de rotation pour faire tourner la roue dentée (1) autour de l'axe médian de celle-ci,
et avec au moins deux inducteurs de durcissement (3) radialement mobiles, pour durcir les corps de dents et/ou les entredents puis les tremper,
sachant que les inducteurs de durcissement (3) sont disposés autour de la circonférence de la roue dentée (1) conformément à un multiple entier de l'angle de secteur de deux dents voisines (2),
et sachant que les inducteurs de durcissement (3), après un mouvement de rotation donnée de la roue dentée (1), peuvent être actionnés simultanément pour durcir les dents (2) qui se trouvent alors dans la zone d'action des inducteurs de durcissement (3),
**caractérisé en ce qu'**il est en outre prévu des inducteurs de revenu (4) dans le même nombre que les inducteurs de durcissement,
sachant que ces inducteurs de revenu sont disposés autour de la circonférence de la roue dentée (1) de telle sorte que les régions de la roue dentée (1) préalablement durcies par les inducteurs de durcissement (3) parviennent, après un mouvement de rotation de la roue dentée (1), immédiatement ou à la fin d'un ou plusieurs cycles dans la zone d'action des inducteurs de revenu (4).

3. Dispositif selon l'une des revendications précédentes, **caractérisé en ce que** les inducteurs de durcissement (3) sont disposés sensiblement uniformément sur la circonférence de la roue dentée (1).

4. Dispositif selon l'une des revendications 1 à 3, **caractérisé en ce que** les inducteurs de durcissement (3) se répartissent le traitement par segments, par le fait que les inducteurs de durcissement (3) durcissent des dents voisines (2) dent par dent.

5. Dispositif selon l'une des revendications 1 à 3, **caractérisé en ce que** des dents (2) sont sautées lors de l'avancement successif de la roue dentée (1) par rotation.

6. Dispositif selon l'une des revendications précédentes, **caractérisé en ce que** les inducteurs de durcissement (3) et/ou les inducteurs de revenu (4) sont de position réglable, considéré dans la direction circonférentielle.

7. Dispositif selon l'une des revendications précédentes, **caractérisé en ce que**, pour durcir toutes les dents (2) de la roue dentée (1), il est prévu plusieurs cycles successifs présentant chacun des séquences de traitement données.

8. Dispositif selon l'une des revendications précédentes, **caractérisé en ce que** les dents sont préchauffées.
